# EUROPEAN PATENT APPLICATION

(11) **EP 3 995 814 A1**
(43) Date of publication of application: **11.05.2022**
(21) Application number: 18925546.6
(22) Date of filing: 06.08.2018
(51) Int. Cl.: G01N 21/3581

(54) **SAMPLE ANALYSIS DEVICE AND PROGRAM FOR SAMPLE ANALYSIS**

(30) Priority: 03.07.2018 JP 2018126551
(71) Applicant: Femto Deployments Inc., Okayama-shi, Okayama 700-0082 (JP)
(72) Inventor: WATANABE, Akira, Okayama-shi, Okayama 700-0082 (JP); OKUNO, Tadashi, Okayama-shi, Okayama 700-0016 (JP); UEDA, Takeji, Okayama-shi, Okayama 701-0212 (JP)
(74) Representative: Vossius & Partner Patentanwälte Rechtsanwälte mbB
(86) International application number: PCT/JP2018/029351
(87) International publication number: WO 2020/008654

(57) **Abstract**

A learning model creation unit 12A that creates a learning model using parameters of a plurality of fitting functions corresponding to a generation source of a composite waveform fit to a frequency spectrum obtained by spectroscopic measurement of a terahertz wave, and a sample information prediction unit 22A that applies a parameter obtained for a sample to be predicted to the learning mode thereby predicting information about the sample to be predicted are included, and the information about the sample to be predicted can be more accurately predicted using a learning model in which a feature quantity representing a property of a sample is reflected as the parameters of the plurality of fitting functions corresponding to the generation source of the composite waveform fit to the frequency spectrum.

## Description

### Technical Field

The present invention relates to a sample analysis apparatus and a sample analysis program, and is particularly suitable for use in an apparatus for analyzing a characteristic of a frequency spectrum obtained by spectroscopic measurement of a sample using a terahertz wave to obtain information about the sample.

### Background Art

Conventionally, a spectroscopic apparatus that measures a characteristic of a substance using an electromagnetic wave has been provided. In the spectroscopic apparatus, a sample transmits or reflects an electromagnetic wave, and a physical property or a chemical property of the sample is measured from a change in the electromagnetic wave caused by an interaction between the electromagnetic wave and the sample. A frequency spectrum of the sample observed by this spectroscopic measurement has a spectrum structure unique to the sample. In particular, in spectroscopy using a terahertz wave, which is a type of electromagnetic wave, an intermolecular interaction due to a hydrogen bond, etc. is observed.

However, since the intermolecular interaction occurring in the sample in response to the terahertz wave has a complicated process, spectra observed by spectroscopic measurement overlap each other, and thus it is more difficult to extract a peak at a specific frequency than in infrared spectroscopy or photoelectron spectroscopy. Therefore, it is difficult to determine a location in the frequency spectrum at which the characteristic of the sample appears or a type of waveform in which the characteristic of the sample appears, and there is a problem that it is extremely difficult to find the characteristic.

In recent years, in view of such a problem, attempts have been made to create a learning model from a spectral shape of terahertz spectroscopy data and analyze the spectroscopy data using machine learning (for example, see Non-Patent Document 1). Non-Patent Document 1 describes that spectroscopic measurement of a potassium chloride aqueous solution having a plurality of concentrations is performed by terahertz total reflection spectroscopy, and machine learning is performed using a plurality of pieces of spectroscopy spectrum data obtained in this way as learning data, thereby creating a model for predicting the potassium chloride concentration from the spectroscopy data.

Non-Patent Document 1: The 65th Japan Society of Applied Physics, Spring Academic Lecture, "Analysis of Terahertz Spectroscopic Measurement Data of Ion Hydration State Using Machine Learning" (March 20, 2018, Daiki Kawakami, Hitoshi Tabata)

### Summary of the Invention

According to Non-Patent Document 1, when learning data was learned by the least squares method, the Ridge method, and the Lasso method, respectively, it was reported that the learning model by the Ridge method was able to predict the potassium chloride concentration of test data most accurately. As is well known, to improve the accuracy of prediction in machine learning, it is important how to appropriately extract a feature quantity of input data using a learning model. However, Non-Patent Document 1 does not mention a scheme of extracting a feature quantity from spectroscopy spectrum data of a terahertz wave.

The invention has been made to solve the above-described problems, and an object of the invention is to enable more accurate prediction of information about a sample from a frequency spectrum obtained by performing spectroscopic measurement on the sample using a terahertz wave.

To solve the above-mentioned problem, in the invention, a learning model for predicting information about a sample is prepared using a parameter determining a property for each of a plurality of fitting functions corresponding to a generation source of composite waveform fit to a frequency spectrum obtained by spectroscopic measurement of the sample using a terahertz wave, and a parameter obtained for the sample to be predicted is applied to the learning model, thereby predicting the information about the sample to be predicted.

According to the invention configured as described above, it is possible to predict information about a sample to be predicted using a learning model in which a feature quantity of a frequency spectrum obtained by performing spectroscopic measurement on a sample is represented by parameters that determine properties of a plurality of fitting functions. That is, a composite waveform of the plurality of fitting functions is fit to a frequency spectrum of a terahertz wave of the sample. For this reason, the parameters that determine the properties of the fitting functions reflect a property of the sample hidden in the frequency spectrum. Therefore, even when the frequency spectrum obtained by performing spectroscopic measurement on the sample using the terahertz wave is one in which a difference in property of the sample is unlikely to clearly appear as a feature of a waveform such as a peak of a specific frequency, information about the sample to be predicted can be accurately predicted by the learning model.

### Brief Description of the Drawings

Fig. 1 is a block diagram illustrating a functional configuration example of a sample analysis apparatus according to a first embodiment.
Fig. 2 is a diagram schematically illustrating a learning model generated by a learning model creation unit according to the first embodiment.
Fig. 3 is a block diagram illustrating a functional configuration example of a parameter calculation apparatus (parameter calculation unit) according to the present embodiment.
Fig. 4 is a diagram illustrating a specific functional configuration example of a fitting processing unit according to the present embodiment.
Fig. 5 is a diagram illustrating an example of a frequency spectrum obtained by a frequency spectrum acquisition unit of the present embodiment.
Fig. 6 is a diagram for description of processing content by a thinning processing unit of the present embodiment.
Fig. 7 is a diagram for description of processing content by a first fitting processing unit of the present embodiment.
Fig. 8 is a diagram for description of processing content by a center frequency specification unit of the present embodiment.
Fig. 9 is a diagram for description of processing content by a second fitting processing unit of the present embodiment.
Fig. 10 is a block diagram illustrating another functional configuration example of the sample analysis apparatus according to the first embodiment.
Fig. 11 is a block diagram illustrating a functional configuration example of a sample analysis apparatus according to a second embodiment.
Fig. 12 is a diagram schematically illustrating a learning model generated by a learning model creation unit according to the second embodiment.
Fig. 13 is a block diagram illustrating another functional configuration example of the sample analysis apparatus according to the second embodiment.
Fig. 14 is a block diagram illustrating a functional configuration example of a sample analysis apparatus according to a third embodiment.
Fig. 15 is a diagram schematically illustrating a learning model generated by a learning model creation unit according to the third embodiment.

### Mode for Carrying Out the Invention

### (First embodiment)

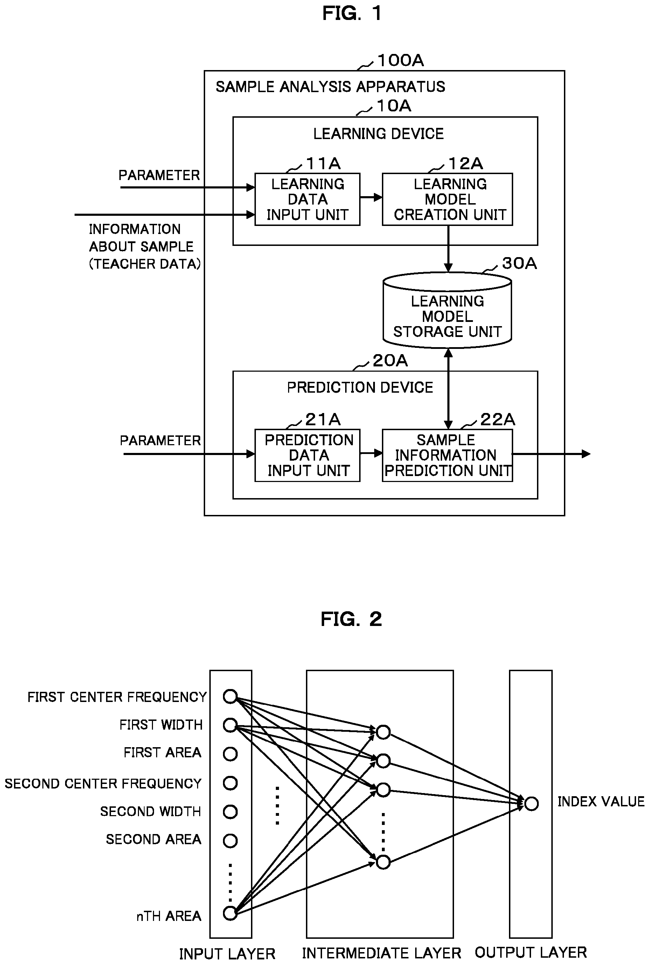

Hereinafter, a description will be given of a first embodiment of the invention with reference to drawings. Fig. 1 is a block diagram illustrating a functional configuration example of a sample analysis apparatus 100A according to the first embodiment. As illustrated in Fig. 1, the sample analysis apparatus 100A according to the first embodiment includes a learning device 10A, a prediction device 20A, and a learning model storage unit 30A. The learning device 10A includes a learning data input unit 11A and a learning model creation unit 12A as a functional configuration thereof. The prediction device 20A includes a prediction data input unit 21A and a sample information prediction unit 22A as a functional configuration thereof.

Each functional block of the learning device 10A and the prediction device 20A can be configured by any of hardware, a digital signal processor (DSP), and software. For example, in the case of being configured by software, each of the above functional blocks is actually configured to include a CPU, a RAM, a ROM, etc. of a computer, and implemented by an operation of a program stored in a recording medium such as the RAM, the ROM, a hard disk, or a semiconductor memory. This description is similarly applied to each functional block included in the sample analysis apparatus according to the second and third embodiments described later.

The learning data input unit 11A inputs a parameter obtained for a learning sample and information about the learning sample as learning data for each of a plurality of learning samples. Here, the plurality of learning samples are samples whose information about the sample (for example, a type of substance used as the sample and a property of the substance (physical property, chemical property, etc.)) is known, and have different properties. It is possible to use a solid or gaseous substance as the sample. However, in the present embodiment, it is possible to use, as the sample, a liquid whose characteristic particularly hardly appears on a frequency spectrum obtained by spectroscopic measurement using a terahertz wave.

For example, in a case where a liquid is used as a sample, it is considered that whether or not a foreign substance is mixed in the liquid is analyzed by terahertz spectroscopy measurement and machine learning. In this case, a plurality of solutions in which additives are intentionally mixed with a liquid in which no foreign substance is mixed is prepared and used as a learning sample. Here, when a plurality of learning samples is prepared by mixing different types of additives, it is possible to predict a type of foreign substance mixed in a liquid to be analyzed based on a learning model created by machine learning using the learning samples. In the case of this example, a known property of a substance (liquid) used as the learning sample is a property that "a foreign substance of a type mixed as an additive is mixed in the liquid".

In addition, when a plurality of learning samples is prepared by changing the mixing amount of the same type of additives, it is possible to predict the amount of a specific type of foreign substance mixed in the liquid to be analyzed based on a learning model created by machine learning using the learning samples. In the case of this example, a known property of the substance (liquid) used as the learning sample is "the amount of the specific foreign substance mixed as an additive". Furthermore, when a plurality of learning samples is created by changing the mixing amount of each of different types of additives, it is possible to predict a type of foreign substance and the amount of the foreign substance mixed in the liquid to be analyzed based on a learning model created by machine learning using the learning samples.

In addition, by creating a liquid containing no foreign substance and a liquid prepared by mixing the same or different additives as a plurality of learning samples, it is possible to predict whether or not a foreign substance is mixed in the liquid to be analyzed (presence or absence of mixing of the foreign substance) based on a learning model created by machine learning using the learning samples. In the case of this example, a known property of the substance (liquid) used as the learning sample is a property that "mixing of the foreign substance is absent" or "mixing of the foreign substance is present".

"Information about the learning sample" input as one piece of the learning data is known information about the sample. The information about the learning sample is used as teacher data for machine learning. Hereinafter, the information about the learning sample may be referred to as teacher data. As described above, for example, in the case of creating a plurality of learning samples by mixing different types of additives, the information about the learning samples is information indicating the types of the additives. Since it is possible to detect a type of additive mixed when the learning sample is created, information specifying the type of the additive may be used as teacher data. Note that the teacher data in this case may be used name information of the additive or identification information uniquely allocated to each type of additive.

In addition, a "parameter obtained for the learning sample" input as another piece of the learning data is a parameter calculated by analyzing a frequency spectrum obtained by spectroscopic measurement using a terahertz wave. In other words, a composite waveform of a plurality of fitting functions is fit to a frequency spectrum obtained from a terahertz wave signal of a learning sample detected by the spectroscopic apparatus, and values that determine properties of the plurality of fitting functions used for the fitting are used as parameters.

In the present embodiment, a plurality of normal distribution functions differing in at least one of a center frequency, the amplitude, and a width is used as the plurality of fitting functions. In addition, in the present embodiment, at least one of a center frequency, the amplitude, a width, and the area of a predetermined region in a function waveform of a normal distribution function is used as a parameter that determines a property of a fitting function. For example, when all four of the center frequency, the amplitude, the width, and the area are used as parameters, and n normal distribution functions are used to generate a composite waveform fit to a frequency spectrum of a certain learning sample, 4 × n parameters correspond to a "parameter obtained for the learning sample". Note that details of calculation of this parameter will be described later.

The learning model creation unit 12A creates a learning model using the learning data (parameters and teacher data) input from the learning data input unit 11A, and stores the created learning model in the learning model storage unit 30A. For example, the learning model creation unit 12A creates the learning model by applying a known machine learning algorithm (for example, a machine learning algorithm using a neural network) using the above-described learning data.

As illustrated in Fig. 2, the learning model generated by the learning model creation unit 12A is configured by a neural network in which a degree of binding between synapses (nodes) is weighted by learning data, and is a model including an input layer, an intermediate layer, and an output layer. In other words, the learning model creation unit 12A provides a plurality of parameters related to n fitting functions used to generate the composite waveform to the input layer, and provides information about the learning sample (teacher data) to the output layer, thereby performing supervised learning. In this way, a neural network is created in which the degree of binding between nodes is weighted such that the same information as the teacher data is obtained from the output layer as an index value for the parameters input to the input layer.

Fig. 2 illustrates an example in which the center frequency, the width, and the area are used as parameters, and 3 × n parameters obtained when n normal distribution functions are used to generate a composite waveform fit to a frequency spectrum are given to the input layer. In addition, Fig. 2 illustrates an example of a neural network in which one index value is output from the input layer to the output layer via the intermediate layer. In the case of mixing of the foreign substance described above as an example, for example, one index value is a value (0 or 1) indicating either "mixing of the foreign substance is absent" or "mixing of the foreign substance is present". Note that in the case of analyzing the presence/absence of mixing of the foreign substance, it is possible to adopt a learning model in which the output layer has two nodes, and an index value indicating a probability of each of "mixing of the foreign substance is absent" and "mixing of the foreign substance is present" is output to each node.

In addition, the output layer may have one node that outputs a value indicating the amount of foreign substance mixed in the liquid. Alternatively, it is possible to adopt a learning model in which a section from an upper limit to a lower limit, which can be assumed as the amount of foreign substance mixed in the liquid, is divided into a plurality of ranges, the same number of nodes as the number of divided ranges are provided in the output layer, and an index value indicating a probability of the amount of mixed foreign substance is output to each node. Further, it is possible to adopt a learning model in which the same number of nodes as the number of a plurality of types of additives used for creating the learning sample is provided in the output layer, and an index value indicating a probability of the type of the mixed foreign substance is output to each node.

As described above, a configuration of the learning model created by the learning model creation unit 12A is appropriately set depending on the object to be analyzed. That is, the neural network illustrated in Fig. 2 schematically illustrates a concept of a learning model created by machine learning, and does not accurately illustrate the number of nodes, a binding scheme between nodes, the number of intermediate layers, etc. according to an actual example.

The prediction data input unit 21A inputs a parameter obtained for a sample to be predicted as prediction data. The "parameter obtained for the sample to be predicted" input by the prediction data input unit 21A as the prediction data refers to a parameter calculated by analyzing a frequency spectrum obtained by spectroscopic measurement using a terahertz wave. This analysis method is the same as analysis performed on the frequency spectrum of the learning sample. That is, a composite waveform of a plurality of fitting functions is fit to a frequency spectrum obtained from a terahertz wave signal of a sample to be predicted (hereinafter, referred to as a prediction sample) detected by the spectroscopic apparatus, and values that determine properties of the plurality of fitting functions used for the fitting are used as parameters.

Here, the parameters input by the prediction data input unit 21A are of the same type as the parameters input by the learning data input unit 11A. That is, in case that the learning data input unit 11A inputs 4 × n parameters (the center frequency, the amplitude, width, and the area for each of the n normal distribution functions used to generate the composite waveform) for one learning sample, the prediction data input unit 21A also inputs 4 × n parameters for the prediction sample.

The sample information prediction unit 22A predicts information about the prediction sample by applying the prediction data (parameter) input by the prediction data input unit 21A to the learning model stored in the learning model storage unit 30A. That is, the sample information prediction unit 22A inputs the parameter input by the prediction data input unit 21A to the input layer of the learning model, thereby acquiring the index value output from the output layer as information predicted for the prediction sample. In the case of mixing of the foreign substance described above as an example, the information predicted for the prediction sample corresponds to the presence or absence of mixing of the foreign substance in a liquid used as the prediction sample, the type of foreign substance mixed in the liquid, the amount of foreign substance mixed in the liquid, etc.

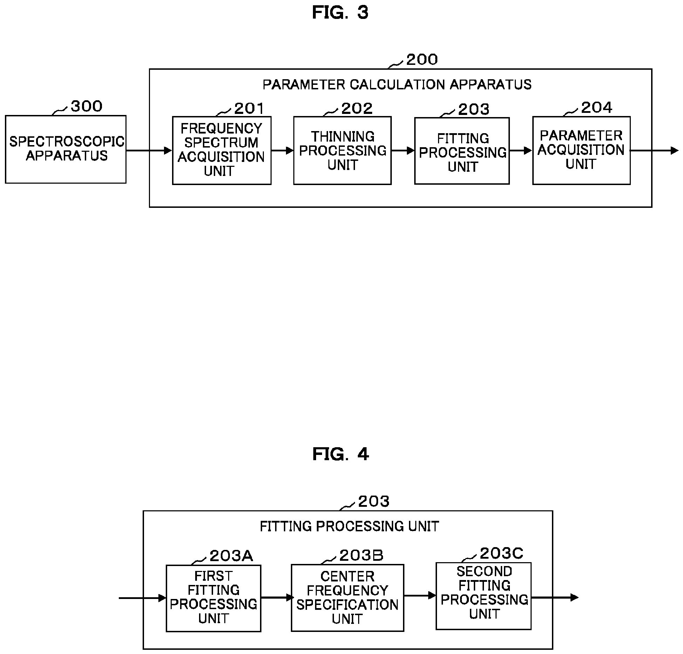

Here, a method of calculating the above-described parameters will be described in detail. Fig. 3 is a block diagram illustrating a functional configuration example of a parameter calculation apparatus 200 (corresponding to a parameter calculation unit of the claims) according to the present embodiment. The parameter calculation apparatus 200 of the present embodiment analyzes a terahertz wave signal of a sample detected by a spectroscopic apparatus 300, and includes a frequency spectrum acquisition unit 201, a thinning processing unit 202, a fitting processing unit 203, and a parameter acquisition unit 204 as a functional configuration thereof.

Each of the functional blocks 201 to 204 can be configured by any of hardware, a DSP, and software. For example, in the case of being configured by software, each of the functional blocks 201 to 204 is actually configured to include a CPU, a RAM, a ROM, etc. of a computer, and implemented by an operation of a program stored in a recording medium such as the RAM, the ROM, a hard disk, or a semiconductor memory.

Here, in the present embodiment, terahertz wave signals of a plurality of learning samples are detected by the spectroscopic apparatus 300, and processing of the parameter calculation apparatus 200 is performed on each of the terahertz wave signals. In addition, in the present embodiment, a terahertz wave signal of a prediction sample is detected by the spectroscopic apparatus 300, and processing of the parameter calculation apparatus 200 is performed on the terahertz wave signal. In other words, the parameter calculation apparatus 200 serves as both a learning parameter calculation unit and a prediction parameter calculation unit of the claims.

The frequency spectrum acquisition unit 201 obtains a frequency spectrum representing an absorbance with respect to a frequency based on the terahertz wave signal detected by the spectroscopic apparatus 300. The spectroscopic apparatus 300 causes a sample to be measured disposed on an optical path to transmit or reflect a terahertz wave, and detects the terahertz wave applied to the sample in such a manner. In the present embodiment, various known types can be used as the spectroscopic apparatus 300.

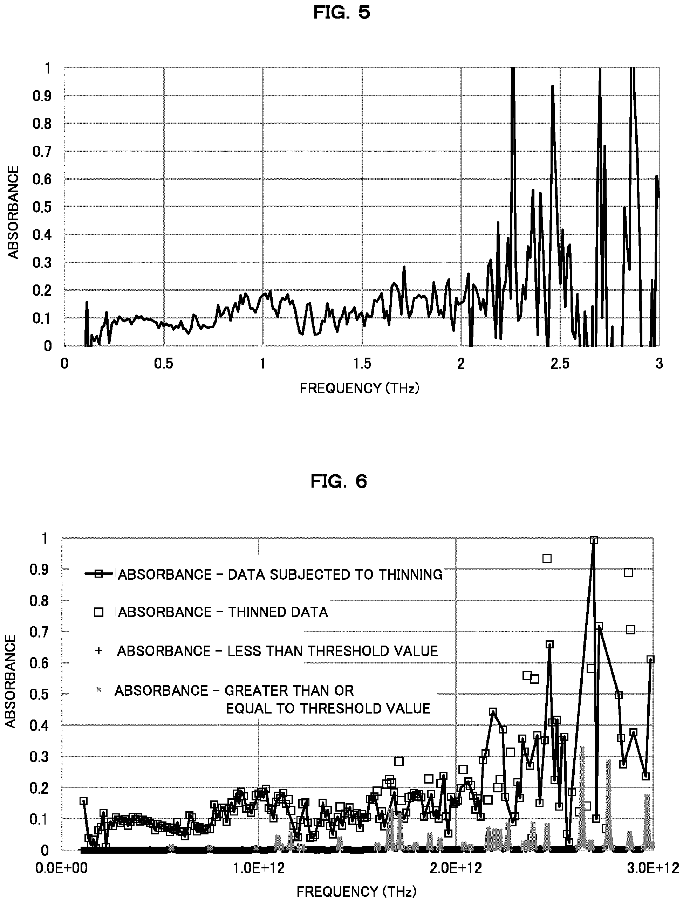

Fig. 5 is a diagram illustrating an example of a frequency spectrum obtained by the frequency spectrum acquisition unit 201. This frequency spectrum has a different waveform for each sample having a different property. However, it is difficult to understand a location in the waveform at which the feature of the sample appears or a type of waveform in which the feature of the sample appears. The parameter calculation apparatus 200 of the present embodiment analyzes the frequency spectrum to calculate a feature quantity according to the property of the sample as a parameter.

The thinning processing unit 202 thins out an extreme value at a frequency at which absorption of the terahertz wave is increased by water vapor other than the sample from absorbance data for each frequency in the frequency spectrum obtained by the frequency spectrum acquisition unit 201. In addition to the sample, water vapor exists on the optical path of the spectroscopic apparatus 300. Since the terahertz wave is absorbed by water vapor, there is a possibility that a property of the water vapor is included in the acquired frequency spectrum. Therefore, the thinning processing unit 202 performs a process of thinning out an extreme value at a frequency at which absorption of the terahertz wave by the water vapor increases.

Note that the frequency at which the absorption of the terahertz wave by the water vapor increases can be specified using, for example, data provided by NICT (National Institute of Information and Communications Technology). NICT discloses data on a radio wave attenuation rate of air (including water vapor) for terahertz wave communication. By using this data, it is possible to specify the frequency at which the absorption of the terahertz wave by the water vapor increases.

Fig. 6 is a diagram for description of processing content by the thinning processing unit 202. Fig. 6 superimposes and illustrates the absorbance data of the frequency spectrum and data obtained by converting the radio wave attenuation rate for each frequency into the absorbance. The thinning processing unit 202 thins out an extreme values (indicated by a mark □) of a frequency at which the absorbance converted from the NICT data is equal to or greater than a set threshold value in the absorbance data for each frequency of the frequency spectrum illustrated in Fig. 6. Note that here, an example is shown in which the radio wave attenuation rate is converted into an absorbance, and then the extreme value of the frequency at which the absorbance is equal to or greater than the set threshold value is thinned out. However, the invention is not limited thereto. For example, an extreme value of a frequency at which the radio wave attenuation rate is equal to or greater than the set threshold value may be thinned out.

Note that it is possible to construct a vacuum environment or an environment in which there is significantly little water vapor equivalent thereto, and install the spectroscopic apparatus 300 in the environment. In such a case, the thinning processing unit 202 can be omitted.

The fitting processing unit 203 fits a composite waveform of a plurality of normal distribution functions different in at least one of the center frequency, the amplitude, and the width to the frequency spectrum obtained by the frequency spectrum acquisition unit 201. In the present embodiment, the fitting processing unit 203 performs a process of fitting a composite waveform of a plurality of normal distribution functions to a plurality of pieces of absorbance data thinned out by the thinning processing unit 202.

In more detail, under the assumption that the frequency spectrum can be approximated by the overlap of a plurality of normal distribution waveforms, the fitting processing unit 203 calculates a plurality of normal distribution functions that minimizes a residual between absorbance data at each frequency of the frequency spectrum (a plurality of pieces of absorbance data thinned out by the thinning processing unit 202) and a value of the composite waveform at each frequency corresponding thereto by optimization calculation using the center frequency, the amplitude, and the width as variables.

As described above, in the present embodiment, a normal distribution function (Gaussian function) is used as an example of a function used for fitting. In addition, a 1/e width is used as an example of a width of the normal distribution function. In addition, as the area of a predetermined region in a function waveform of the normal distribution function, the area of a waveform region having the amplitude equal to or greater than the amplitude corresponding to the 1/e width is used. In the present embodiment, the number of normal distribution functions to be synthesized can be arbitrarily set.

Fig. 4 is a diagram illustrating a specific functional configuration example of the fitting processing unit 203. As illustrated in Fig. 4, the fitting processing unit 203 includes a first fitting processing unit 203A, a center frequency specification unit 203B, and a second fitting processing unit 203C as a more specific functional configuration. Here, in the present embodiment, it is presumed that terahertz wave signals are detected by the spectroscopic apparatus 300 for a plurality of learning samples collected from the same liquid, and processes of the frequency spectrum acquisition unit 201, the thinning processing unit 202, the fitting processing unit 203, and the parameter acquisition unit 204 are performed on the respective terahertz wave signals.

For each of a plurality of frequency spectra obtained for a plurality of samples collected from the same liquid, the first fitting processing unit 203A performs fitting to a frequency spectrum using a composite waveform of a plurality of normal distribution functions using the center frequency, the amplitude, and the width as parameters and different in at least the center frequency.

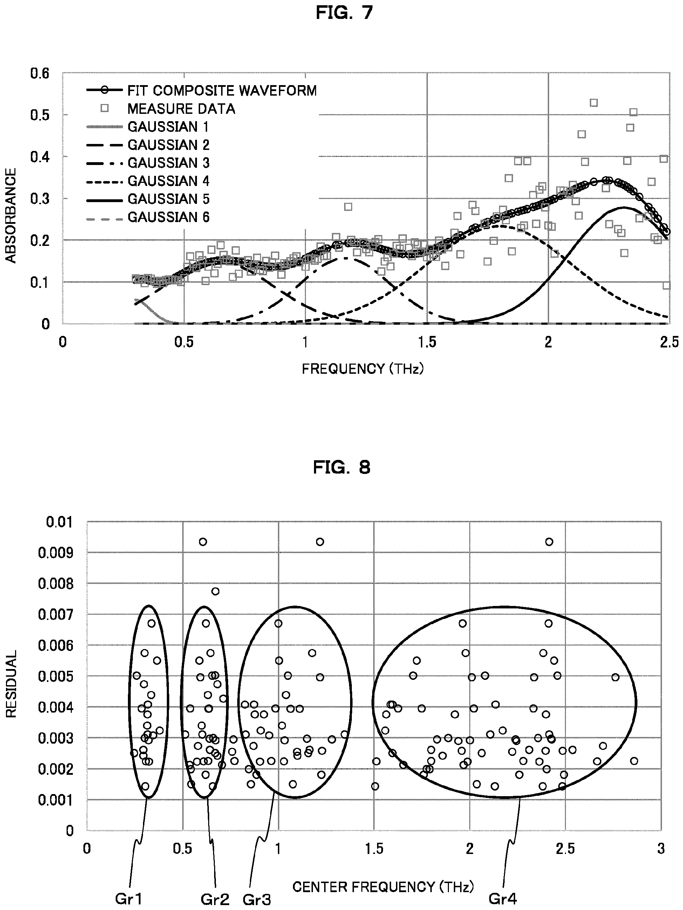

Fig. 7 is a diagram for description of processing content by the first fitting processing unit 203A. Note that Fig. 7 illustrates an example of a state in which fitting is performed for a frequency spectrum of one sample. As illustrated in Fig. 7, the first fitting processing unit 203A performs optimization calculation so that a residual between a value of an absorbance (indicated by a mark □) at each frequency of the frequency spectrum and a value at each frequency on a composite waveform of a plurality of normal distribution functions (Gaussian 1 to 6) variably set using the center frequency, the amplitude, and the width as parameters becomes minimized.

The center frequency specification unit 203B groups each center frequency of the normal distribution function used for a plurality of times of fitting to a plurality of frequency spectra (for a plurality of samples collected from the same liquid) by the first fitting processing unit 203A, and specifies a representative center frequency from each group. For example, the center frequency specification unit 203B performs grouping in units of collections of respective center frequencies of a plurality of normal distribution functions obtained by a fitting process, and specifies one or more representative center frequencies from each group.

Fig. 8 is a diagram for description of processing content by the center frequency specification unit 203B. Fig. 8 illustrates residuals between values at respective center frequencies of a plurality of normal distribution functions obtained by the first fitting processing unit 203A based on a plurality of frequency spectra obtained from a plurality of samples and values of absorbance in the plurality of frequency spectra at frequencies corresponding to the respective center frequencies.

As illustrated in Fig. 8, a plurality of center frequencies is present around 0.2 to 0.4 THz as a collection, a plurality of center frequencies is present around 0.5 to 0.7 THz as a collection, a plurality of center frequencies is present around 0.8 to 1.4 THz as a collection, and a plurality of center frequencies is present around 1.5 to 2.8 THz as a collection. The center frequency specification unit 203B sets four groups Gr1 to Gr4 for each of such collections of center frequencies.

Then, the center frequency specification unit 203B specifies one or a plurality of representative center frequencies from each of the groups Gr1 to Gr4. A method of specifying the representative frequency can be arbitrarily set. For example, it is possible to specify, as a representative, one frequency at which a plurality of center frequencies is most concentrated in a group. Alternatively, an average value of a plurality of center frequencies belonging to a group may be calculated, and one center frequency closest to the average value may be specified as a representative. Further, with regard to a group in which a frequency range of the group is wide and a plurality of center frequencies is relatively widely dispersed, such as the groups Gr3 and Gr4, a plurality of center frequencies may be specified at equal intervals as representatives.

Note that when grouping is performed for each collection of center frequencies, only a center frequency whose residual value is smaller than a predetermined value may be used.

The second fitting processing unit 203C fixes n center frequencies specified by the center frequency specification unit 203B for each of a plurality of frequency spectra obtained for a plurality of samples collected from the same liquid, and performs fitting to the frequency spectra again with a composite waveform of n normal distribution functions using the amplitude and the width as parameters. In other words, the second fitting processing unit 203C calculates n normal distribution functions (the center frequency is the one specified by the center frequency specification unit 203B) that minimize a residual between a value of absorbance at each frequency of a frequency spectrum and a value of a composite waveform at each frequency corresponding thereto by optimization calculation using the amplitude and the width as variables.

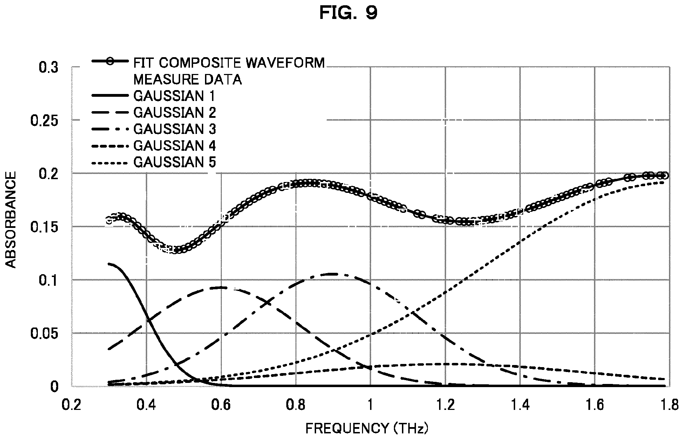

Fig. 9 is a waveform diagram illustrating processing content by the second fitting processing unit 203C. Note that similarly to Fig. 7, Fig. 9 illustrates an example of a state in which fitting is performed for a frequency spectrum of one sample. In addition, Fig. 9 illustrates an example of a case of specifying, by the center frequency specification unit 203B, five center frequencies of 0.3 THz from group Gr1, 0.6 THz from group Gr2, 0.9 THz and 1.2 THz at equal intervals from group Gr3, and 1.8 THz from group Gr4 illustrated in Fig. 8. With regard to group Gr4, since the frequency range is considerably wide and a plurality of center frequencies is widely dispersed, it is presumed that noise is likely to be included, and only one center frequency is specified as a representative.

As illustrated in Fig. 9, the second fitting processing unit 203C performs optimization calculation so that a residual between a value of absorbance at each frequency of a frequency spectrum and a value at each frequency on a composite waveform of n normal distribution functions (Gaussian 1 to 5) variably set using the amplitude and the width as parameters is minimized.

The parameter acquisition unit 204 acquires, as parameters, values that determine the properties of the plurality of fitting functions used for fitting as described above. That is, the parameter acquisition unit 204 acquires, as parameters, at least one of the center frequency, the amplitude, the width, and the area of the n normal distribution functions used for fitting by the second fitting processing unit 203C. In the case of creating a learning model using the neural network illustrated in Fig. 2, the parameter acquisition unit 204 acquires 3 × n parameters.

The parameters acquired by the parameter acquisition unit 204 are stored in, for example, a removable storage medium and input to the sample analysis apparatus 100A illustrated in Fig. 1. That is, the parameters calculated by analyzing the frequency spectrum of the learning sample are input to the learning data input unit 11A, and the parameters calculated by analyzing the frequency spectrum of the prediction sample are input to the prediction data input unit 21A. Then, as described above, a learning model is created by the learning device 10A, and information about the prediction sample is predicted by the prediction device 20A.

Note that here, a description has been given of an example in which parameters are transferred from the parameter calculation apparatus 200 to the sample analysis apparatus 100A via the removable storage medium. However, the invention is not limited thereto. For example, the parameter calculation apparatus 200 and the sample analysis apparatus 100A may be connected via a wired or wireless communication network, and parameters may be transmitted from the parameter calculation apparatus 200 to the sample analysis apparatus 100A via the communication network.

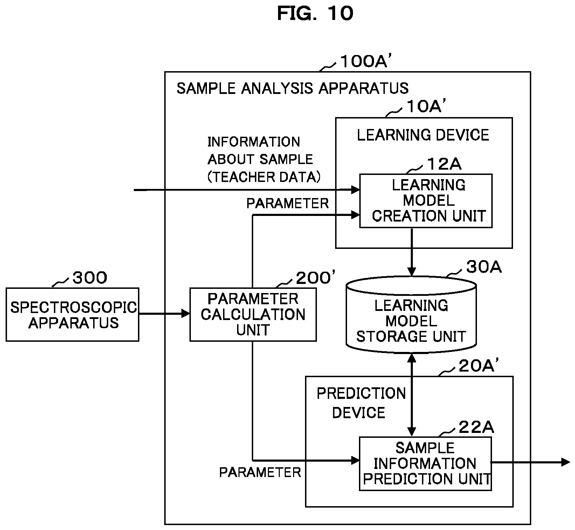

In addition, here, a description has been given of an example in which the parameter calculation apparatus 200 and the sample analysis apparatus 100A are separately configured. However, the invention is not limited thereto. For example, the sample analysis apparatus 100A may have an integrated configuration incorporating a function of the parameter calculation apparatus 200. Fig. 10 is a diagram illustrating a configuration example of this case. As illustrated in Fig. 10, a sample analysis apparatus 100A' includes a learning model creation unit 12A, a sample information prediction unit 22A, and a parameter calculation unit 200' as a functional configuration thereof.

In the case of configuring the sample analysis apparatus 100A' as illustrated in Fig. 10, at the time of learning, the parameter calculation unit 200' acquires each frequency spectrum obtained by spectroscopic measurement of a sample using a terahertz wave for each of a plurality of learning samples, and calculates each parameter by analyzing the acquired frequency spectrum. The learning model creation unit 12A creates a learning model using the parameter calculated for each of the plurality of learning samples by the parameter calculation unit 200' and information (teacher data) about the plurality of learning samples as learning data, and causes the learning model storage unit 30A to store the created learning model. Note that the teacher data may only be set in the learning model creation unit 12A at any timing from when the learning samples are created until analysis is started.

In addition, at the time of prediction, the parameter calculation unit 200' acquires a frequency spectrum obtained by spectroscopic measurement using a terahertz wave for the prediction sample as prediction data, and analyzes the acquired frequency spectrum to calculate a parameter. The sample information prediction unit 22A predicts information about the prediction sample by applying the parameter calculated by the parameter calculation unit 200' to the learning model.

Note that in the examples of Fig. 1 and Fig. 10, a description has been given of an example in which one parameter calculation apparatus 200 (or parameter calculation unit 200') is used for both learning and prediction. However, the parameter calculation apparatus 200 (or parameter calculation unit 200') may be separately provided for each of learning and prediction. That is, a learning parameter calculation unit and a prediction parameter calculation unit may be separately configured. In this case, the parameter calculation apparatus 200 may be provided for learning, and the parameter calculation unit 200' may be provided for prediction. Conversely, the parameter calculation unit 200' may be provided for learning, and the parameter calculation apparatus 200 may be provided for prediction.

As described in detail above, in the first embodiment, a learning model for predicting information about a sample is prepared using a parameter that determines a property of each of a plurality of fitting functions corresponding to generation sources of a composite waveform fit to a frequency spectrum obtained by spectroscopic measurement of the sample using a terahertz wave, and a parameter obtained for a prediction sample is applied to the learning model, thereby predicting information about the prediction sample.

According to the first embodiment configured as described above, it is possible to predict information about a prediction sample using a learning model in which a feature quantity of a frequency spectrum obtained by performing spectroscopic measurement on a sample is represented by parameters that determine properties of a plurality of fitting functions. That is, a composite waveform of the plurality of fitting functions is fit to a frequency spectrum of a terahertz wave of the sample. For this reason, the parameters that determine the properties of the fitting functions reflect a property of the sample hidden in the frequency spectrum. Therefore, even when the frequency spectrum obtained by performing spectroscopic measurement on the sample using the terahertz wave is one in which a difference in property of the sample is unlikely to clearly appear as a feature of a waveform such as a peak of a specific frequency, information about the prediction sample can be accurately predicted by the learning model.

In addition, a learning model that can accurately predict information about the prediction sample in this way (for example, a pattern of a type of information to be predicted with respect to a liquid sample) and information about a liquid sample corresponding to an index value output from the learning model can contribute to standardization of a liquid state, which has been difficult to realize. Further, by accumulating the learning, the liquid state can be specified as a numerical value, and the liquid state can be standardized. In other words, an object used to rely on the sense, feelings, etc. of craftsmen can now be obtained as a standardized index without any individual difference, which can beneficially contribute to a liquid-using industry and further contribute to a functional design of the liquid, which has been difficult until now.

### (Second embodiment)

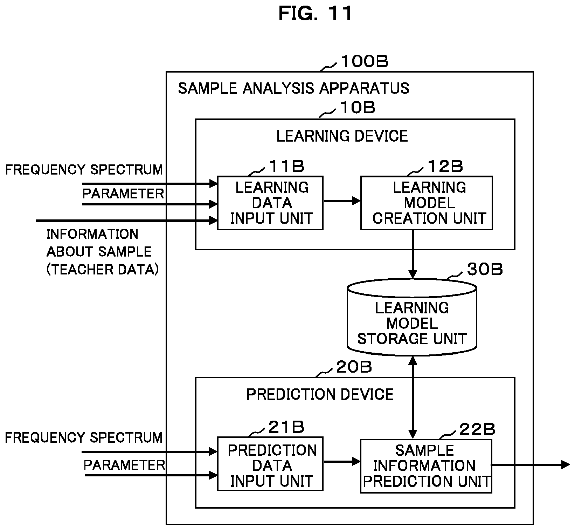

Next, a second embodiment of the invention will be described with reference to the drawings. Fig. 11 is a block diagram illustrating a functional configuration example of a sample analysis apparatus 100B according to the second embodiment. As illustrated in Fig. 11, the sample analysis apparatus 100B according to the second embodiment includes a learning device 10B, a prediction device 20B, and a learning model storage unit 30B. The learning device 10B includes a learning data input unit 11B and a learning model creation unit 12B as a functional configuration thereof. The prediction device 20B includes a prediction data input unit 21B and a sample information prediction unit 22B as a functional configuration thereof.

Also in the second embodiment, a parameter calculation apparatus 200 (see Fig. 3) is present separately from the sample analysis apparatus 100B. And, in the parameter calculation apparatus 200, as described in the first embodiment, a frequency spectrum of a terahertz wave is obtained, and the frequency spectrum is analyzed to calculate a parameter of a fitting function. Also in the second embodiment, the parameter calculation apparatus 200 functions as a learning parameter calculation unit and a prediction parameter calculation unit.

In the second embodiment, the learning model storage unit 30B stores a learning model for predicting information about a sample using a frequency spectrum of a terahertz wave and a parameter of a fitting function. And, the prediction device 20B (sample information predicting unit 22B) applies a frequency spectrum obtained by spectroscopic measurement of a prediction sample using the terahertz wave and a parameter obtained for the prediction sample to the learning model, thereby predicting information about the prediction sample.

The learning data input unit 11B inputs a parameter and a frequency spectrum obtained for a learning sample and information about the learning sample as learning data for each of a plurality of learning samples. Here, each of the plurality of learning samples, the information about the learning sample (teacher data), and the parameter obtained for the learning sample is similar to that described in the first embodiment. In addition, the frequency spectrum obtained for the learning sample is a frequency spectrum acquired by the frequency spectrum acquisition unit 201 when spectroscopic measurement is performed on the learning sample using the terahertz wave in the spectroscopic apparatus 300 of Fig. 3.

The learning model creation unit 12B creates a learning model using the learning data (parameter, frequency spectrum, and teacher data) input by the learning data input unit 11B, and causes the learning model storage unit 30B to store the created learning model. Also in the second embodiment, the learning model creation unit 12B creates a learning model by applying a machine learning algorithm using a known neural network using the above-described learning data.

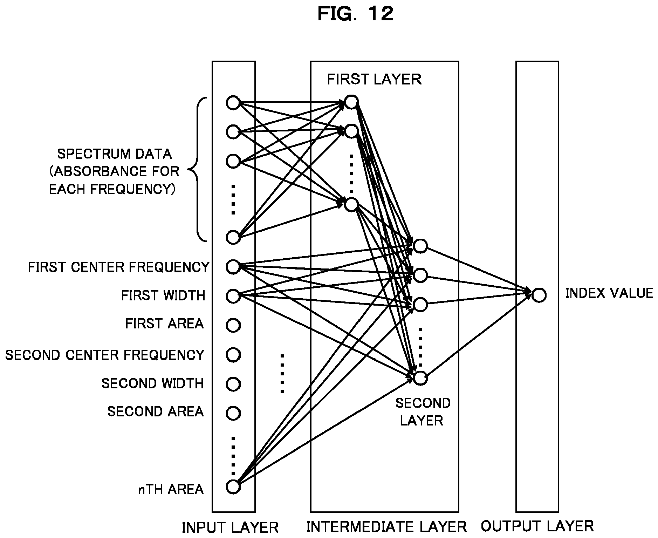

Fig. 12 is a diagram schematically illustrating a learning model generated by the learning model creation unit 12B according to the second embodiment. As illustrated in Fig. 12, the learning model created in the second embodiment has, as nodes of an input layer, nodes for inputting a plurality of pieces of data related to the frequency spectrum (hereinafter referred to as spectrum data) in addition to the nodes for inputting the plurality of parameters described in the first embodiment. For example, the spectrum data may be an absorbance for each frequency.

In addition, in an example illustrated in Fig. 12, an intermediate layer has a two-layer structure. Each node of a first layer is connected from each node of the input layer for inputting the spectrum data, and has a role of a compression layer for extracting a feature quantity of the spectrum data. In the first layer, a feature quantity different from a parameter calculated by the parameter calculation apparatus 200 (at least one of the center frequency, the amplitude, the width, and the area of the normal distribution function used for fitting) is extracted from the frequency spectrum. Each node of a second layer is connected from each node of the input layer for inputting a plurality of parameters and each node of the first layer, and has a role for guiding an index value of an output layer from each input value.

The learning model creation unit 12B provides spectrum data related to a frequency spectrum of a learning sample acquired in the parameter calculation apparatus 200 and parameters related to n fitting functions used to generate a composite waveform to the input layer, and provides information about the learning sample (teacher data) to the output layer, thereby performing supervised learning. In this way, a neural network in which a degree of binding between nodes is weighted such that the same information as the teacher data is obtained as an index value from the output layer for the frequency spectrum and parameters input to the input layer is created.

Note that a configuration of the learning model created by the learning model creation unit 12B is not limited to the form of the neural network illustrated in Fig. 12. For example, even though the number of intermediate layers is two in Fig. 12, it is possible to adopt a configuration of three or more layers. In addition, even though the number of nodes in the output layer is one in Fig. 12, a plurality of nodes may be used.

The prediction data input unit 21B inputs a parameter and a frequency spectrum obtained for the prediction sample as prediction data. Here, the parameter obtained for the prediction sample is the same as that described in the first embodiment. In addition, the frequency spectrum obtained for the prediction sample is a frequency spectrum acquired by the frequency spectrum acquisition unit 201 when spectroscopic measurement is performed on the prediction sample by the terahertz wave in the spectroscopic apparatus 300 of Fig. 3.

The sample information prediction unit 22B applies the prediction data (parameter and frequency spectrum) input by the prediction data input unit 21B to the learning model stored in the learning model storage unit 30B, thereby predicting information about the prediction sample. In the case of mixing of the foreign substance described above as an example, information predicted with respect to the prediction sample corresponds to presence or absence of mixing of the foreign substance in a liquid used as the prediction sample, the type of the foreign substance mixed in the liquid, the amount of the foreign substance mixed in the liquid, etc.

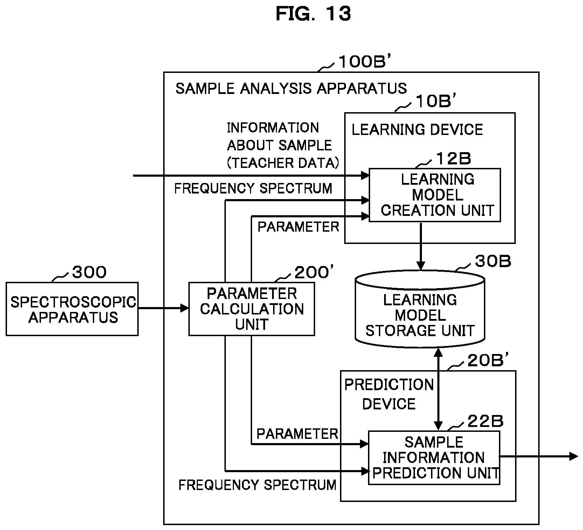

Note that also in the second embodiment, a description has been given of an example in which the parameter calculation apparatus 200 and the sample analysis apparatus 100B are separately configured. However, as illustrated in Fig. 13, it is possible to adopt an integrated configuration in which the sample analysis apparatus 100B' incorporates a function of the parameter calculation unit 200'.

In the case of configuring the sample analysis apparatus 100B' as illustrated in Fig. 13, at the time of learning, the parameter calculation unit 200' acquires each frequency spectrum obtained by spectroscopic measurement of a sample using a terahertz wave for each of a plurality of learning samples, and analyzes the acquired frequency spectrum to calculate each parameter. The learning model creation unit 12B creates a learning model using, as learning data, a frequency spectrum acquired for each of the plurality of learning samples by the parameter calculation unit 200', a parameter calculated for each of the plurality of learning samples, and information about the plurality of learning samples (teacher data), and causes the learning model storage unit 30B to store the created learning model.

In addition, at the time of prediction, the parameter calculation unit 200' acquires a frequency spectrum obtained by spectroscopic measurement using a terahertz wave for the prediction sample as prediction data, and analyzes the acquired frequency spectrum to calculate a parameter. The sample information prediction unit 22B applies the frequency spectrum related to the prediction sample acquired by the parameter calculation unit 200' and the parameter calculated by the parameter calculation unit 200' to the learning model, thereby predicting information about the prediction sample.

Note that in the examples illustrated in Fig. 11 and Fig. 13, a description has been given of an example in which one parameter calculation apparatus 200 (or parameter calculation unit 200') is used for both learning and prediction. However, the parameter calculation apparatus 200 (or parameter calculation unit 200') may be separately provided for each of learning and prediction. In this case, the parameter calculation apparatus 200 may be provided for learning, and the parameter calculation unit 200' may be provided for prediction. Conversely, the parameter calculation unit 200' may be provided for learning, and the parameter calculation apparatus 200 may be provided for prediction.

As described in detail above, in the second embodiment, a learning model for predicting information about the sample is created using the spectrum data of the frequency spectrum in addition to the parameter of the fitting function obtained by analyzing the frequency spectrum of the terahertz wave, and the parameter and the frequency spectrum obtained for the prediction sample is applied to the learning model, thereby predicting information about the prediction sample. According to the second embodiment configured as described above, since information about the prediction sample can be predicted using a larger feature quantity, information about the sample can be more accurately predicted.

### (Third embodiment)

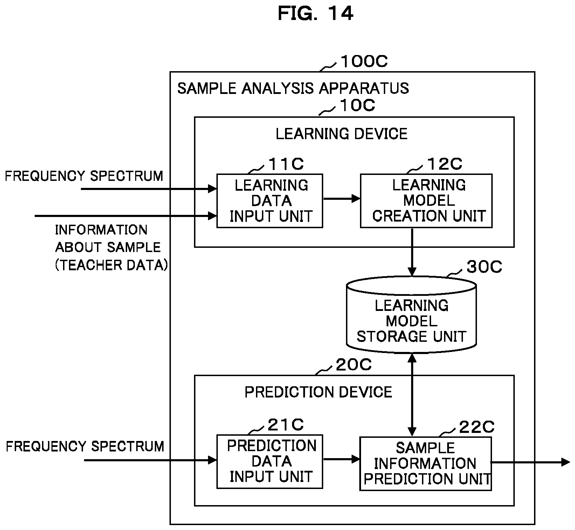

Next, a third embodiment of the invention will be described with reference to the drawings. Fig. 14 is a block diagram illustrating a functional configuration example of a sample analysis apparatus 100C according to the third embodiment. As illustrated in Fig. 14, the sample analysis apparatus 100C according to the third embodiment includes a learning device 10C, a prediction device 20C, and a learning model storage unit 30C. The learning device 10C includes a learning data input unit 11C and a learning model creation unit 12C as a functional configuration thereof. The prediction device 20C includes a prediction data input unit 21C and a sample information prediction unit 22C as a functional configuration thereof.

In the third embodiment, a process of calculating a parameter by the parameter calculation apparatus 200 (parameter calculation unit 200') is executed as a part of a neural network. Therefore, in the third embodiment, the parameter calculation apparatus 200 is not present separately from the sample analysis apparatus 100C. However, only a function of the frequency spectrum acquisition unit 201 of Fig. 3 is present outside the sample analysis apparatus 100C. Alternatively, similarly to Fig. 10 and Fig. 13, the function of the frequency spectrum acquisition unit 201 may be incorporated in the sample analysis apparatus 100C.

In the third embodiment, the learning model storage unit 30C stores a learning model for obtaining a parameter of a fitting function from a frequency spectrum of a terahertz wave, and for predicting information about a sample using the obtained parameter. Then, the prediction device 20C (sample information prediction unit 22C) applies a frequency spectrum obtained by spectroscopic measurement of the prediction sample using the terahertz wave to the learning model to predict information about the prediction sample.

The learning data input unit 11C inputs a frequency spectrum obtained for a learning sample and information about the learning sample as learning data for each of a plurality of learning samples. Here, each of the plurality of learning samples, the information about the learning samples (teacher data), and the frequency spectra obtained for the learning samples are the same as that described in the second embodiment.

The learning model creation unit 12C creates a learning model using the learning data (frequency spectra and teacher data) input by the learning data input unit 11C, and causes the learning model storage unit 30C to store the created learning model. Also in the third embodiment, the learning model creation unit 12C creates a learning model by applying a machine learning algorithm using a known neural network using the above-described learning data.

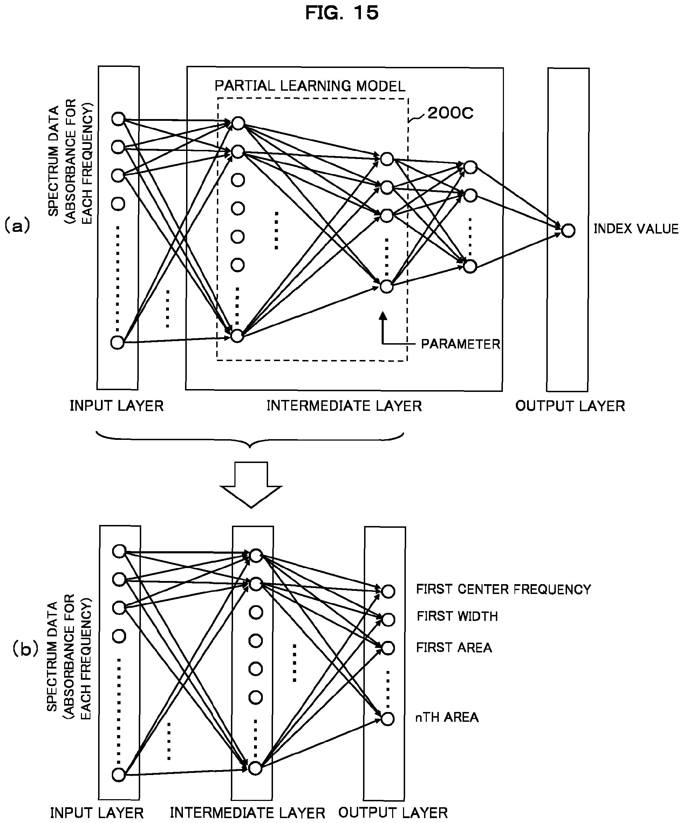

Fig. 15 is a diagram schematically illustrating a learning model generated by the learning model creation unit 12C according to the third embodiment. As illustrated in Fig. 15 (a), the learning model created in the third embodiment has, as a node of an input layer, nodes for inputting a plurality of data (spectrum data) related to the frequency spectrum described in the second embodiment.

In addition, in an example illustrated in Fig. 15, an intermediate layer has a three-layer structure. A partial learning model 200C including a first layer and a second layer has a role of a compression layer for acquiring, as a feature quantity, a parameter corresponding to a parameter of the fitting function described in the first embodiment and the second embodiment (at least one of the center frequency, the amplitude, the width, and the area of the normal distribution function) . That is, each node of the first layer is connected from each node of the input layer for inputting spectrum data, each node of the second layer is connected from each node of the first layer, and a plurality of parameters is predicted from the spectrum data by the two layers.

As described above, the partial learning model 200C including the first layer and the second layer of the intermediate layer is a model for predicting a plurality of parameters by applying the spectrum data of the frequency spectrum to the partial learning model 200C. Each node of a third layer is connected from each node of the second layer, and has a role for guiding an index value of the output layer from a value of each parameter output to each node of the second layer.

The learning model creation unit 12C provides the spectrum data related to the frequency spectrum of the learning sample acquired by the frequency spectrum acquisition unit 201 to the input layer, and provides the information about the learning sample (teacher data) to the output layer, thereby performing supervised learning. In this way, a neural network in which a degree of binding between nodes is weighted such that the same information as the teacher data is obtained as an index value from the output layer for the frequency spectrum input to the input layer is created.

Note that here, a description has been given of an example in which learning is performed for the entire neural network including the partial learning model 200C. However, after learning only the partial learning model 200C for predicting a parameter from the frequency spectrum in a separate frame, the learned partial learning model 200C may be incorporated in the entire neural network.

That is, to learn the partial learning model 200C, as illustrated in Fig. 15(b), a neural network is configured to include an input layer for inputting spectrum data, and an intermediate layer and an output layer for predicting a plurality of parameters from the spectrum data. Then, the spectrum data related to the frequency spectrum of the learning sample is provided to the input layer, and the plurality of parameters for the frequency spectrum is provided as teacher data to the output layer, thereby performing supervised learning. In this case, as the parameters provided to the output layer, it is sufficient to use those previously calculated from the frequency spectrum using the parameter calculation apparatus 200 provided separately from the sample analysis apparatus 100C.

Note that to increase the amount of learning data used when the partial learning model 200C is learned, it is possible to create another frequency spectrum obtained by adding noise to a frequency spectrum of an actually existing learning sample, and calculate a parameter by the parameter calculation apparatus 200 using the another frequency spectrum, thereby adding a set of the another frequency spectrum and the parameter (teacher data) as learning data.

When the entire learning model is learned by incorporating the partial learning model 200C learned as illustrated in Fig. 15(b) into the entire neural network of Fig. 15(a), learning may be performed in a state in which content of the partial learning model 200C is fixed or learning may be performed in a state in which change of the content is permitted. However, in the case where the change is permitted, when the change is permitted indefinitely, the content may greatly deviate from the content of the previously learned partial learning model 200C. Therefore, the change may be permitted under certain conditions.

Note that a configuration of the learning model created by the learning model creation unit 12C (including a configuration of the partial learning model 200C) is not limited to the form of the neural network illustrated in Fig. 15. For example, even though the number of layers of the partial learning model 200C is set to two in Fig. 15, a configuration of three or more layers may be adopted. Similarly, even though the number of layers of the intermediate layer including the partial learning model 200C is set to three in Fig. 15, a configuration of three or more layers may be adopted. In other words, the number of layers other than the partial learning model 200C may be set to two or more. In addition, the number of nodes of the output layer is set to one in Fig. 15. However, a plurality of nodes may be used.

The prediction data input unit 21C inputs a frequency spectrum obtained for the prediction sample as prediction data. Here, the frequency spectrum obtained for the prediction sample is the same as that described in the second embodiment.

The sample information prediction unit 22C predicts information about the prediction sample by applying the prediction data (frequency spectrum) input by the prediction data input unit 21C to the learning model stored in the learning model storage unit 30C.

As described above in detail, according to the third embodiment, it is unnecessary to separately perform a process analyzing a frequency spectrum obtained by spectroscopic measurement of a sample using a terahertz wave to calculate a parameter and a process of performing prediction by applying a parameter to a neural network. That is, it becomes possible to perform all the processes related to prediction using a computer dedicated to the neural network.

Note that in the third embodiment, content described in the second embodiment may be applied in combination. In more detail, learning and prediction may be performed using a parameter extracted from the frequency spectrum in the compression layer of the neural network in addition to the parameter predicted in the partial learning model 200C.

In addition, in the first to third embodiments, descriptions have been given of examples in which the sample analysis apparatus 100A to 100C are configured as including both the learning devices 10A to 10C and the prediction devices 20A to 20C, respectively. However, the invention is not limited thereto. That is, the learning devices 10A to 10C and the prediction devices 20A to 20C may be configured as separate devices, and the prediction devices 20A to 20C may be used as the sample analysis apparatuses 100A to 100C.

In addition, in the above embodiments, as a property of a sample to be analyzed, a property associated with mixing of a foreign substance in a liquid has been given as an example. However, the invention is not limited thereto. That is, when a frequency spectrum of a terahertz wave can be obtained by performing spectroscopic measurement on a sample using the spectroscopic apparatus 300, and known information can be provided as teacher data for the sample, each one can be used as an object to be analyzed according to the embodiments.

For example, when a name of a sample, a chemical formula, etc. is used as "information about a learning sample (teacher data)" corresponding to one piece of learning data, and learning of a learning model is performed using the teacher data and a parameter and/or a frequency spectrum obtained for the learning sample as the learning data, it is possible to predict the sample name or the chemical formula from a parameters and/or a frequency spectrum obtained for an unknown sample.

In addition, when predetermined evaluation information for an index related to taste or smell of a beverage is used as "information about a learning sample (teacher data)" corresponding to one piece of learning data, and a learning model is learned using the teacher data and a parameter and/or a frequency spectrum obtained for the learning sample as learning data, it is possible to predict whether a beverage matching the index can be manufactured from a parameter and/or a frequency spectrum obtained for a manufactured beverage.

For example, taste or smell of a specific beverage (liquor, soft drink, milk, and other various beverages) is provided with a certain index for each manufacturer in many cases. That is, when such beverages are manufactured, evaluations are performed as uniformly as possible by human senses so as to satisfy a predetermined index. In this case, for example, when a learning model is created using evaluation information created by a person skilled in the evaluation (whether the index is matched, a degree of matching indicating a degree at which the index is matched, etc.) as teacher data, and a parameter and/or a frequency spectrum obtained for a manufactured beverage (prediction sample) is applied to the learning model, it is possible to obtain, from the learning model, an evaluation result corresponding to a degree at which the beverage matches the index of taste or smell regardless of the skilled person.

In addition, when a pH value of a sample is used as "information about a learning sample (teacher data)" corresponding to one piece of learning data, and a learning model is learned using the teacher data and a parameter and/or a frequency spectrum obtained for the learning sample as learning data, it is possible to predict the pH value from a parameter and/or a frequency spectrum obtained for an unknown sample. A normal pH meter corresponds to a contact type, and corresponds to a destructive inspection since liquid seeps out from a sensor unit. On the other hand, spectroscopic measurement corresponds to a non-destructive non-contact inspection. Therefore, according to the present embodiment, it is possible to predict a pH value by a non-destructive non-contact inspection of a sample.

In addition, when a micelle or vesicle state of a liquid (whether or not the liquid is in a micelle state, whether or not the liquid is in a vesicle state, critical micelle concentration, critical vesicle concentration, etc.) is used as "information about a learning sample (teacher data)" corresponding to one piece of learning data, and a learning model is learned using the teacher data and a parameter and/or a frequency spectrum obtained for the learning sample as learning data, it is possible to predict a micelle or vesicle state from a parameter and/or a frequency spectrum obtained for an unknown sample. An object conventionally empirically determined using various measuring devices in combination can be predicted from a result of spectroscopic measurement using a terahertz wave.

In addition, when a body liquid such as blood, urine, breast milk, or sweat is used as a sample, information about presence or absence of a disease or progress of a medical condition is used as "information about a learning sample (teacher data)" corresponding to one piece of learning data, and a learning model is learned using the teacher data and a parameter and/or a frequency spectrum obtained for the learning sample as learning data, it is possible to predict presence or absence of a disease or progress of a medical condition from a parameter and/or a frequency spectrum obtained for an unknown body liquid.

Possible examples are listed above. When the present embodiment can be applied, it is possible to predict various other properties.

In addition, in the first to third embodiments, the neural network is given as an example of the learning model. However, the learning model is not limited thereto. For example, the learning model may be configured as a regression model such as a linear regression, a logistic regression, or a support vector machine. Alternatively, the learning model may be configured as a tree model such as a decision tree or a random forest. Alternatively, the learning model may be configured as a Bayes model or a clustering model such as a k-nearest neighbor method.

In addition, in the first to third embodiments, a description has been given of an example of performing supervised learning. However, when a large amount of learning data can be prepared, unsupervised learning may be performed.

In addition, in the first to third embodiments, a description has been given of an example in which after performing the first fitting process on frequency spectra related to a plurality of samples, n center frequencies are specified to perform the second fitting process. However, only the first fitting process may be performed. Note that it is preferable to perform the second fitting processing as in the above-described embodiments since noise can be suppressed.

In addition, in the first to third embodiments, a normal distribution function (Gaussian function) is used as an example of the function used for fitting. However, implementation is allowed using a Lorentz function. In addition, it is possible to use a probability distribution function such as a Poisson distribution function (probability mass function or cumulative distribution function) or a chi-square distribution function (probability density function or cumulative distribution function) that is not centrally symmetric and is asymmetric, and it is possible to use another function whose waveform has a mountain shape. When a probability distribution function is used, fitting is performed using a value representing a property of a probability distribution (for example, a median or a mode of the amplitude, a frequency at which an amplitude value is obtained, a frequency width at which the amplitude is equal to or greater than a predetermined value or equal to or less than a predetermined value, etc.) as a parameter. In the case of using a mountain-shaped function, fitting is performed using the maximum amplitude corresponding to an apex, a frequency at which the maximum amplitude is obtained, a frequency width at which the amplitude is equal to or greater than a predetermined value or equal to or less than a predetermined value, etc. as a parameter.

In addition, in the first to third embodiments, a description has been given of an example in which an absorbance is used as a property value of a terahertz wave signal, and a frequency spectrum representing an absorbance with respect to a frequency is obtained. However, another property value such as a transmittance may be used.

In addition, each of the first to third embodiments described above is merely an example of a concrete embodiment for carrying out the invention, and the technical scope of the invention should not be interpreted in a limited manner by the embodiment. That is, the invention can be implemented in various forms without departing from a gist or a main feature thereof.

### Reference Signs List

10A to 10C Learning device
11A to 11C Learning data input unit
12A to 12C Learning model creation unit
20A to 20C Prediction device
21A to 21C Prediction data input unit
22A to 22C Sample information prediction unit
100A to 100C Sample analysis apparatus
200 Parameter calculation apparatus (parameter calculation unit)
200' Parameter calculation unit
200C Partial learning model
201 Frequency spectrum acquisition unit
202 Thinning processing unit
203 Fitting processing unit
203A First fitting processing unit
203B Center frequency specification unit
203C Second fitting processing unit
204 Parameter acquisition unit

## Claims

1. A sample analysis apparatus comprising:
a learning model storage unit that stores a learning model for predicting information about a sample using a parameter determining a property for each of a plurality of fitting functions corresponding to a generation source of a composite waveform fit to a frequency spectrum obtained by spectroscopic measurement of the sample using a terahertz wave; and
a sample information prediction unit that applies the parameter acquired for the sample to be predicted to the learning model, thereby predicting information about the sample to be predicted.

2. The sample analysis apparatus according to claim 1, further comprising:
a learning data input unit that inputs, for each of a plurality of learning samples as learning data, the parameter obtained for the learning sample and information about the learning sample; and
a learning model creation unit that creates the learning model using the learning data input by the learning data input unit, and causes the learning model storage unit to store the created learning model.

3. The sample analysis apparatus according to claim 1, further comprising:
a learning parameter calculation unit as a parameter calculation unit that acquires, for each of a plurality of learning samples, each frequency spectrum obtained by spectroscopic measurement of the sample using the terahertz wave, and analyzes the acquired frequency spectrum to calculate each parameter; and
a learning model creation unit that creates the learning model using the parameter calculated for each of the plurality of learning samples by the learning parameter calculation unit and information about the plurality of learning samples as learning data, and causes the learning model storage unit to store the created learning model.

4. The sample analysis apparatus according to any one of claims 1 to 3, further comprising:
a prediction data input unit for inputting, as prediction data, the parameter acquired for the sample to be predicted,
wherein the sample information prediction unit applies the prediction data inputted through the prediction data input unit to the learning model, thereby predicting information about the sample to be predicted.

5. The sample analysis apparatus according to claim 1, further comprising:
a prediction parameter calculation unit as a parameter calculation unit that acquires the frequency spectrum obtained by spectroscopic measurement using the terahertz wave for a sample to be predicted, and analyzes the acquired frequency spectrum to calculate the parameter;
wherein the sample information prediction unit applies the parameter calculated by the prediction parameter calculation unit to the learning model, thereby predicting information about the sample to be predicted.

6. The sample analysis apparatus according to claim 1, wherein
the learning model storage unit stores a learning model for predicting information about the sample using the parameter and the frequency spectrum; and
the sample information prediction unit applies a frequency spectrum obtained by spectroscopic measurement of the sample to be predicted using the terahertz wave and the parameter acquired for the sample to be predicted to the learning model, thereby predicting information about the sample to be predicted.

7. The sample analysis apparatus according to claim 6, further comprising:
a learning data input unit that inputs, for each of a plurality of learning samples as learning data, the parameter and the frequency spectrum obtained for the learning sample and information about the learning sample; and
a learning model creation unit that creates the learning model using the learning data input by the learning data input unit, and causes the learning model storage unit to store the created learning model.

8. The sample analysis apparatus according to claim 6, further comprising:
a learning parameter calculation unit as a parameter calculation unit that acquires, for each of a plurality of learning samples, each frequency spectrum obtained by spectroscopic measurement of the sample using the terahertz wave, and analyzes the acquired frequency spectrum to calculate each parameter; and
a learning model creation unit that creates the learning model using the frequency spectrum acquired for each of the plurality of learning samples by the learning parameter calculation unit, the parameter calculated for each of the plurality of learning samples by the learning parameter calculation unit, and information about the plurality of learning samples as learning data, and causes the learning model storage unit to store the created learning model.

9. The sample analysis apparatus according to any one of claims 6 to 8, further comprising:
a prediction data input unit for inputting, as prediction data, the parameter and the frequency spectrum acquired for the sample to be predicted,
wherein the sample information prediction unit applies the prediction data inputted through the prediction data input unit to the learning model, thereby predicting information about the sample to be predicted.

10. The sample analysis apparatus according to any one of claims 6 to 8, further comprising:
a prediction parameter calculation unit as a parameter calculation unit that acquires the frequency spectrum obtained by spectroscopic measurement of the sample using the terahertz wave for the sample to be predicted, and analyzes the acquired frequency spectrum to calculate the parameter; and
wherein the sample information prediction unit applies the frequency spectrum acquired by the prediction parameter calculation unit and the parameter calculated by the prediction parameter calculation unit to the learning model, thereby predicting information about the sample to be predicted.

11. The sample analysis apparatus according to claim 1, wherein
the learning model storage unit stores a learning model for obtaining the parameter from the frequency spectrum and predicting information about the sample using the obtained parameter; and
the sample information prediction unit applies, in place of the parameter, the frequency spectrum obtained by spectroscopic measurement of the sample to be predicted using the terahertz wave to the learning model, thereby predicting information about the sample to be predicted.

12. The sample analysis apparatus according to claim 1, wherein
the learning model storage unit stores a learning model for obtaining the parameter from the frequency spectrum and predicting information about the sample using the obtained parameter and the frequency spectrum; and
the sample information prediction unit applies a frequency spectrum obtained by spectroscopic measurement of the sample to be predicted using the terahertz wave and the parameter to the learning model, thereby predicting information about the sample to be predicted.

13. The sample analysis apparatus according to claim 11 or 12, further comprising:
a learning data input unit for inputting, for each of a plurality of learning samples as learning data, the frequency spectrum obtained for the learning sample and information about the learning sample; and
a learning model creation unit that creates the learning model using the learning data input by the learning data input unit, and causes the learning model storage unit to store the created learning model.

14. The sample analysis apparatus according to claim 11 or 12, further comprising:
a prediction data input unit for inputting, as prediction data, the frequency spectrum acquired for the sample to be predicted,
wherein the sample information prediction unit applies the prediction data inputted through the prediction data input unit to the learning model, thereby predicting information about the sample to be predicted.

15. The sample analysis apparatus according to claim 11 or 12, wherein processing for obtaining the parameter from the frequency spectrum is processing for predicting the parameter by applying the frequency spectrum to a partial learning model for predicting the parameter from the frequency spectrum.

16. The sample analysis apparatus according to any one of claim 1 to 15,
wherein the plurality of fitting functions are a plurality of normal distribution functions different in at least one of a center frequency, an amplitude, and a width in the normal distribution functions, and
wherein the parameter is at least one of a center frequency, an amplitude, a width, and an area of a predetermined region in a function waveform.

17. The sample analysis apparatus according to any one of claim 3, 5, 8 and 10, wherein the parameter calculation unit includes:
a fitting processing unit that fits a composite waveform of the plurality of fitting functions to the frequency spectrum, and
a parameter acquisition unit that acquires, as the parameter, a value determining a property of each of the plurality of fitting functions used for fitting.

18. The sample analysis apparatus according to claim 17, further comprising:
a thinning processing unit that thins out a property value at a frequency at which absorption of the terahertz wave by water vapor other than the sample becomes large among property values for respective frequencies in the frequency spectrum; and
wherein the fitting processing unit fits a composite waveform of the plurality of fitting functions to the property value thinned by the thinning processing unit.

19. The sample analysis apparatus according to claim 17 or 18, wherein the fitting processing unit performs the fitting by using a plurality of normal distribution functions in which at least one of a center frequency, an amplitude, and a width is different, as the plurality of fitting functions.

20. The sample analysis apparatus according to claim 19, wherein the fitting processing unit calculates the plurality of normal distribution functions so that a residual between a property value at each frequency of the frequency spectrum and a value of the composite waveform at each frequency corresponding to the property value is minimized through optimization calculation using at least one of the center frequency, the amplitude, and the width as a valiable.

21. The sample analysis apparatus according to claim 19 or 20, wherein
the fitting processing unit includes
a first fitting processing unit that performs fitting to the frequency spectrum using a composite waveform of a plurality of normal distribution functions different in at least the center frequency using the center frequency, the amplitude, and the width as parameters for each of a plurality of frequency spectra related to a plurality of samples,
a center frequency specification unit that groups respective center frequencies of the normal distribution functions used for fitting to the plurality of frequency spectra by the first fitting processing unit, and specifies one or a plurality of representative center frequencies from each group, thereby specifying a total of n center frequencies, and
a second fitting processing unit that fixes the n center frequencies specified by the center frequency specification unit to set an amplitude and a width as parameters for each of the plurality of frequency spectra related to the plurality of samples, and performs fitting to the frequency spectra using a composite waveform of n normal distribution functions, and
the parameter acquisition unit acquires, as the parameter, at least one of a center frequency, an amplitude, a width, and an area of a predetermined region in a function waveform for each of the n normal distribution functions used for fitting by the second fitting processing unit.

22. A sample analysis program implemented on a sample analysis apparatus that stores a learning model for predicting information about a sample using a parameter determining a property for each of a plurality of fitting functions corresponding to a generation source of a composite waveform fit to a frequency spectrum obtained by spectroscopic measurement of the sample using a terahertz wave, the sample analysis program causing a computer of the sample analysis apparatus to function as:
a sample information prediction means that applies the parameter acquired for the sample to be predicted to the learning model, thereby predicting information about the sample to be predicted.

## Amended claims

### Amended claims under Art. 19.1 PCT

1. A sample analysis apparatus comprising:
a learning model storage unit that stores a learning model for predicting information about a sample using a parameter determining a property for each of a plurality of fitting functions corresponding to a generation source of a composite waveform fit to a frequency spectrum obtained by spectroscopic measurement of the sample using a terahertz wave;
a learning parameter calculation unit as a parameter calculation unit that acquires, for each of a plurality of learning samples, each frequency spectrum obtained by spectroscopic measurement of the sample using the terahertz wave, and analyzes the acquired frequency spectrum to calculate each parameter; and
a learning model creation unit that creates the learning model using the parameter calculated for each of the plurality of learning samples by the learning parameter calculation unit and information about the plurality of learning samples as learning data, and causes the learning model storage unit to store the created learning model,
wherein the parameter calculation unit includes
a thinning processing unit that thins out a property value at a frequency at which absorption of the terahertz wave by water vapor other than the sample becomes large among property values for respective frequencies in the frequency spectrum,
a fitting processing unit that fits a composite waveform of the plurality of fitting functions to the property value thinned by the thinning processing unit, and
a parameter acquisition unit that acquires, as the parameter, a value determining a property of each of the plurality of fitting functions used for fitting.

2. The sample analysis apparatus according to claim 1, further comprising:
a prediction parameter calculation unit as a parameter calculation unit that acquires the frequency spectrum obtained by spectroscopic measurement using the terahertz wave for a sample to be predicted, and analyzes the acquired frequency spectrum to calculate the parameter; and
a sample information prediction unit that applies the parameter calculated by the prediction parameter calculation unit to the learning model, thereby predicting information about the sample to be predicted.

3. A sample analysis apparatus comprising:
a learning model storage unit that stores a learning model for predicting information about a sample using a parameter determining a property for each of a plurality of fitting functions corresponding to a generation source of a composite waveform fit to a frequency spectrum obtained by spectroscopic measurement of the sample using a terahertz wave, and the frequency spectrum;
a learning parameter calculation unit as a parameter calculation unit that acquires, for each of a plurality of learning samples, each frequency spectrum obtained by spectroscopic measurement of the sample using the terahertz wave, and analyzes the acquired frequency spectrum to calculate each parameter; and
a learning model creation unit that creates the learning model using the frequency spectrum acquired for each of the plurality of learning samples by the learning parameter calculation unit, the parameter calculated for each of the plurality of learning samples by the learning parameter calculation unit, and information about the plurality of learning samples as learning data, and causes the learning model storage unit to store the created learning model,
wherein the parameter calculation unit includes
a thinning processing unit that thins out a property value at a frequency at which absorption of the terahertz wave by water vapor other than the sample becomes large among property values for respective frequencies in the frequency spectrum,
a fitting processing unit that fits the composite waveform of the plurality of fitting functions to the property value thinned by the thinning processing unit, and
a parameter acquisition unit that acquires, as the parameter, a value determining a property of each of the plurality of fitting functions used for fitting.

4. The sample analysis apparatus according to claim 3, further comprising:
a prediction parameter calculation unit as a parameter calculation unit that acquires the frequency spectrum obtained by spectroscopic measurement of the sample using the terahertz wave for a sample to be predicted, and analyzes the acquired frequency spectrum to calculate the parameter; and
a sample information prediction unit that applies the frequency spectrum acquired by the prediction parameter calculation unit and the parameter calculated by the prediction parameter calculation unit to the learning model, thereby predicting information about the sample to be predicted.

5. A sample analysis apparatus comprising:
a learning model storage unit that stores a learning model for predicting information about a sample using a parameter determining a property for each of a plurality of fitting functions corresponding to a generation source of a composite waveform fit to a frequency spectrum obtained by spectroscopic measurement of the sample using a terahertz wave;
a prediction parameter calculation unit as a parameter calculation unit that acquires the frequency spectrum obtained by spectroscopic measurement of the sample using the terahertz wave for a sample to be predicted, and analyzes the acquired frequency spectrum to calculate the parameter; and
a sample information prediction unit that applies the parameter calculated by the prediction parameter calculation unit to the learning model, thereby predicting information about the sample to be predicted,
wherein the parameter calculation unit includes
a thinning processing unit that thins out a property value at a frequency at which absorption of the terahertz wave by water vapor other than the sample becomes large among property values for respective frequencies in the frequency spectrum,
a fitting processing unit that fits the composite waveform of the plurality of fitting functions to the property value thinned by the thinning processing unit, and
a parameter acquisition unit that acquires, as the parameter, a value determining a property of each of the plurality of fitting functions used for fitting.

6. The sample analysis apparatus according to claim 5, further comprising:
a learning data input unit that inputs, for each of a plurality of learning samples as learning data, the parameter obtained for the learning sample and information about the learning sample; and
a learning model creation unit that creates the learning model using the learning data input by the learning data input unit, and causes the learning model storage unit to store the created learning model.

7. A sample analysis apparatus comprising:
a learning model storage unit that stores a learning model for predicting information about a sample using a parameter determining a property for each of a plurality of fitting functions corresponding to a generation source of a composite waveform fit to a frequency spectrum obtained by spectroscopic measurement of the sample using a terahertz wave, and the frequency spectrum;
a prediction parameter calculation unit as a parameter calculation unit that acquires the frequency spectrum obtained by spectroscopic measurement of the sample using the terahertz wave for a sample to be predicted, and analyzes the acquired frequency spectrum to calculate the parameter; and
a sample information prediction unit that applies the frequency spectrum acquired by the prediction parameter calculation unit and the parameter calculated by the prediction parameter calculation unit to the learning model, thereby predicting information about the sample to be predicted,
wherein the parameter calculation unit includes
a thinning processing unit that thins out a property value at a frequency at which absorption of the terahertz wave by water vapor other than the sample becomes large among property values for respective frequencies in the frequency spectrum,
a fitting processing unit that fits the composite waveform of the plurality of fitting functions to the property value thinned by the thinning processing unit, and
a parameter acquisition unit that acquires, as the parameter, a value determining a property of each of the plurality of fitting functions used for fitting.

8. The sample analysis apparatus according to claim 5, further comprising:
a learning data input unit that inputs, for each of a plurality of learning samples as learning data, the parameter and the frequency spectrum obtained for the learning sample and information about the learning sample; and
a learning model creation unit that creates the learning model using the learning data input by the learning data input unit, and causes the learning model storage unit to store the created learning model.

9. The sample analysis apparatus according to any one of claims 1 to 8, wherein the fitting processing unit uses a plurality of normal distribution functions in which at least one of a center frequency, an amplitude, and a width is different as the plurality of fitting functions, and performs fitting by calculating the plurality of normal distribution functions so that a residual between a property value at each frequency of the frequency spectrum and a value of the composite waveform at each frequency corresponding to the property value is minimized through optimization calculation using at least one of the center frequency, the amplitude, and the width as a variable.

10. The sample analysis apparatus according to claim 9, wherein
the fitting processing unit includes
a first fitting processing unit that performs fitting to the frequency spectrum using a composite waveform of a plurality of normal distribution functions different in at least the center frequency using the center frequency, the amplitude, and the width as parameters for each of a plurality of frequency spectra related to a plurality of samples,
a center frequency specification unit that groups respective center frequencies of the normal distribution functions used for fitting to the plurality of frequency spectra by the first fitting processing unit, and specifies one or a plurality of representative center frequencies from each group, thereby specifying a total of n center frequencies, and
a second fitting processing unit that fixes the n center frequencies specified by the center frequency specification unit to set an amplitude and a width as parameters for each of the plurality of frequency spectra related to the plurality of samples, and performs fitting to the frequency spectra using a composite waveform of n normal distribution functions, and
the parameter acquisition unit acquires, as the parameter, at least one of a center frequency, an amplitude, a width, and an area of a predetermined region in a function waveform for each of the n normal distribution functions used for fitting by the second fitting processing unit.

11. A sample analysis program implemented on a sample analysis apparatus that stores, in a learning model storage unit, a learning model for predicting information about a sample using a parameter determining a property for each of a plurality of fitting functions corresponding to a generation source of a composite waveform fit to a frequency spectrum obtained by spectroscopic measurement of the sample using a terahertz wave, the sample analysis program causing a computer of the sample analysis apparatus to function as:
learning parameter calculation means as parameter calculation means that acquires, for each of a plurality of learning samples, each frequency spectrum obtained by spectroscopic measurement of the sample using the terahertz wave, and analyzes the acquired frequency spectrum to calculate each parameter; and
learning model creation means that creates the learning model using the parameter calculated for each of the plurality of learning samples by the learning parameter calculation means and information about the plurality of learning samples as learning data, and causes the learning model storage unit to store the created learning model,
wherein the parameter calculation means includes
thinning processing means that thins out a property value at a frequency at which absorption of the terahertz wave by water vapor other than the sample becomes large among property values for respective frequencies in the frequency spectrum,
fitting processing means that fits a composite waveform of the plurality of fitting functions to the property value thinned by the thinning processing means, and
parameter acquisition means that acquires, as the parameter, a value determining a property of each of the plurality of fitting functions used for fitting.

12. The sample analysis program according to claim 11, further comprising:
prediction parameter calculation means as parameter calculation means that acquires the frequency spectrum obtained by spectroscopic measurement using the terahertz wave for a sample to be predicted, and analyzes the acquired frequency spectrum to calculate the parameter; and
sample information prediction means that applies the parameter calculated by the prediction parameter calculation means to the learning model, thereby predicting information about the sample to be predicted.

13. A sample analysis program implemented on a sample analysis apparatus that stores, in a learning model storage unit, a learning model for predicting information about a sample using a parameter determining a property for each of a plurality of fitting functions corresponding to a generation source of a composite waveform fit to a frequency spectrum obtained by spectroscopic measurement of the sample using a terahertz wave, and the frequency spectrum, the sample analysis program causing a computer of the sample analysis apparatus to function as:
learning parameter calculation means as parameter calculation means that acquires, for each of a plurality of learning samples, each frequency spectrum obtained by spectroscopic measurement of the sample using the terahertz wave, and analyzes the acquired frequency spectrum to calculate each parameter; and
learning model creation means that creates the learning model using the frequency spectrum acquired for each of the plurality of learning samples by the learning parameter calculation means, the parameter calculated for each of the plurality of learning samples by the learning parameter calculation means, and information about the plurality of learning samples as learning data, and causes the learning model storage unit to store the created learning model,
wherein the parameter calculation means includes
thinning processing means that thins out a property value at a frequency at which absorption of the terahertz wave by water vapor other than the sample becomes large among property values for respective frequencies in the frequency spectrum,
fitting processing means that fits a composite waveform of the plurality of fitting functions to the property value thinned by the thinning processing means, and
parameter acquisition means that acquires, as the parameter, a value determining a property of each of the plurality of fitting functions used for fitting.

14. The sample analysis program according to claim 13, further comprising:
prediction parameter calculation means as parameter calculation means that acquires the frequency spectrum obtained by spectroscopic measurement of the sample using the terahertz wave for a sample to be predicted, and analyzes the acquired frequency spectrum to calculate the parameter; and
sample information prediction means that applies the frequency spectrum acquired by the prediction parameter calculation means and the parameter calculated by the prediction parameter calculation means to the learning model, thereby predicting information about the sample to be predicted.

15. A sample analysis program implemented on a sample analysis apparatus that stores, in a learning model storage unit, a learning model for predicting information about a sample using a parameter determining a property for each of a plurality of fitting functions corresponding to a generation source of a composite waveform fit to a frequency spectrum obtained by spectroscopic measurement of the sample using a terahertz wave, the sample analysis program causing a computer of the sample analysis apparatus to function as:
prediction parameter calculation means as parameter calculation means that acquires the frequency spectrum obtained by spectroscopic measurement of the sample using the terahertz wave for a sample to be predicted, and analyzes the acquired frequency spectrum to calculate the parameter; and
sample information prediction means that applies the parameter calculated by the prediction parameter calculation means to the learning model, thereby predicting information about the sample to be predicted,
wherein the parameter calculation means includes
thinning processing means that thins out a property value at a frequency at which absorption of the terahertz wave by water vapor other than the sample becomes large among property values for respective frequencies in the frequency spectrum,
fitting processing means that fits a composite waveform of the plurality of fitting functions to the property value thinned by the thinning processing means, and
parameter acquisition means that acquires, as the parameter, a value determining a property of each of the plurality of fitting functions used for fitting.

16. The sample analysis program according to claim 15, further comprising:
learning data input means that inputs, for each of a plurality of learning samples as learning data, the parameter obtained for the learning sample and information about the learning sample; and
learning model creation means that creates the learning model using the learning data input by the learning data input means, and causes the learning model storage unit to store the created learning model.

17. A sample analysis program implemented on a sample analysis apparatus that stores, in a learning model storage unit, a learning model for predicting information about a sample using a parameter determining a property for each of a plurality of fitting functions corresponding to a generation source of a composite waveform fit to a frequency spectrum obtained by spectroscopic measurement of the sample using a terahertz wave, and the frequency spectrum, the sample analysis program causing a computer of the sample analysis apparatus to function as:
prediction parameter calculation means as parameter calculation means that acquires the frequency spectrum obtained by spectroscopic measurement of the sample using the terahertz wave for a sample to be predicted, and analyzes the acquired frequency spectrum to calculate the parameter; and
sample information prediction means that applies the frequency spectrum acquired by the prediction parameter calculation means and the parameter calculated by the prediction parameter calculation means to the learning model, thereby predicting information about the sample to be predicted,
wherein the parameter calculation means includes thinning processing means that thins out a property value at a frequency at which absorption of the terahertz wave by water vapor other than the sample becomes large among property values for respective frequencies in the frequency spectrum,
fitting processing means that fits a composite waveform of the plurality of fitting functions to the property value thinned by the thinning processing means, and
parameter acquisition means that acquires, as the parameter, a value determining a property of each of the plurality of fitting functions used for fitting.

18. The sample analysis program according to claim 17, further comprising:
learning data input means that inputs, for each of a plurality of learning samples as learning data, the parameter and the frequency spectrum obtained for the learning sample and information about the learning sample; and
learning model creation means that creates the learning model using the learning data input by the learning data input means, and causes the learning model storage unit to store the created learning model.
